# EUROPÄISCHE PATENTSCHRIFT

(11) **EP 3 117 198 B1**
(45) Veröffentlichungstag und Bekanntmachung des Hinweises auf die Patenterteilung: **16.06.2021**
(21) Anmeldenummer: 15709432.7
(22) Anmeldetag: 26.02.2015
(51) Int. Cl.: G01M 7/02, G01V 13/00, G01P 21/00, B06B 1/12, G01M 7/04

(54) **SCHWINGUNGSERREGER MIT LASTKOMPENSATION**
VIBRATION EXCITER HAVING LOAD COMPENSATION
GÉNÉRATEUR DE VIBRATIONS À COMPENSATION DE CHARGE

(30) Priorität: 12.03.2014 DE 102014103299
(43) Veröffentlichungstag der Anmeldung: 18.01.2017
(73) Patentinhaber: Spektra Schwingungstechnik Und Akustik GmbH Dresden, 01189 Dresden (DE)
(72) Erfinder: BRUCKE, Martin, 01309 Dresden (DE); IWANCZIK, Martin, 01219 Dresden (DE)
(74) Vertreter: Lippert Stachow Patentanwälte Rechtsanwälte Partnerschaft mbB
(86) Internationale Anmeldenummer: PCT/EP2015/053975
(87) Internationale Veröffentlichungsnummer: WO 2015/135755

(56) Entgegenhaltungen:
- JP-U- S6 054 949
- US-A- 2 773 482
- US-A- 3 393 554
- US-A- 5 033 285
- US-A1- 2003 155 194

## Beschreibung

Die Erfindung, gemäß beigefügtem Anspruch 1, betrifft einen Schwingungserreger mit Lastkompensation zur dynamischen Anregung von Prüflingen umfassend eine Basis, einen Aktor, eine mittels des Aktors in einer Anregungsrichtung relativ zur Basis bewegbare und durch ein Linearführungsmittel parallel zur Anregungsrichtung geführte Armatur und ein die Gewichtskraft zumindest der Armatur, vorzugsweise zuzüglich des anzuregenden Prüflings, kompensierendes pneumatisches Lastkompensationsmittel.

Schwingungserreger, oftmals auch als Shaker bezeichnet, finden ihren Einsatz zur Untersuchung der dynamischen Eigenschaften eines Prüflings in einer Schwingprüfeinrichtung. Hauptsächlich werden Schwingungserreger für Zwecke der Werkstoffuntersuchung eingesetzt, wobei beispielsweise Bauteile oder ganze Baugruppen den Prüfling bilden. Hierzu wird der Prüfling mit einem definierten Testsignal angeregt und gleichzeitig die Position und/oder der Bewegungszustand des Prüflings durch geeignete Messmittel bestimmt. Diese Messmittel können neben Dehnmessstreifen auch Schwingungsaufnehmer oder andere Sensoren zur Positionsbestimmung oder zur Bestimmung des Bewegungszustandes aufweisen. Aus diesen ermittelten Messgrößen können unter anderem Rückschlüsse auf das mechanische Verhalten, wie beispielsweise das Ermüdungsverhalten, gezogen werden.

In der US 5 033 285 A ist ein Schwingungserreger mit Lastkompensation zur dynamischen Anregung von Prüflingen bekannt, der eine Basis, einen Aktor und eine Armatur aufweist, die mittels des Aktors relativ zur Basis bewegbar ist und durch ein Linearführungsmittel parallel zur Anregungsrichtung geführt ist. Hier ist weiterhin ein Lastkompensationsmittel vorgesehen.

In der US 2003/15194 A1 ist ein hybrider elektropneumatischen Schwingungsentkoppler mit einem Stellglied beschrieben. Der pneumatische Teil umfasst einen pneumatischen Kolben, der über ein Luftlager in einer Kolbenbuchse axial beweglich gelagert ist. Unter dem Kolben wird die Luft komprimiert, was der Lastkompensation dienen kann. In der US 3 393 554 A ist ein Schwingungstisch mit pneumatischer Lastkompensation zur dynamischen Anregung von Prüflingen bekannt, der eine Basis, einen elektromagnetischen Aktor und einen Tisch aufweist, der mittels des Aktors relativ zur Basis bewegbar ist und durch ein Linearführungsmittel parallel zur Anregungsrichtung geführt ist. Das Linearführungsmittel weist weiterhin ein Luftlager auf.

Ferner sind Schwingungserreger bekannt, die dazu geeignet sind, die eigentlichen Messmittel, beispielsweise Schwingungsaufnehmer, für die Untersuchung von Schwingungsvorgängen zu untersuchen, insbesondere aber zu kalibrieren, wie beispielsweise in ISO 16063 vorgeschrieben. Die Vielfalt bekannter Schwingungsaufnehmer hinsichtlich Messbereich, Baugröße usw. ist sehr groß. Neben sehr kleinen und leichten Schwingungsaufnehmern für Beschleunigungen von bis zu einer Million g, wobei 1 g der mittleren Erdbeschleunigung von 9,81 m / s² entspricht, sind auch sehr große und schwere Schwingungsaufnehmer, wie sie beispielsweise in Seismometern eingesetzt werden, bekannt. Seismometer werden verwendet, um Bodenerschütterungen von Erdbeben und andere seismische Wellen zu detektieren. Hierzu weisen Seismometer eine an Federn schwingend gelagerte Masse auf, deren mechanische Schwingung gemessen wird. Zur Bestimmung der Richtung einer auftretenden Bodenerschütterung sind Seismometer mit bis zu drei solcher schwingungsfähigen Feder-Masse-Systemen bekannt. Die mechanischen Schwingungen, wie sie bei seismischen Vorgängen typischerweise auftreten sind sehr klein; die kleinsten erfassbaren Beschleunigungen liegen im Bereich von einigen Billionsteln der normalen mittleren Erdbeschleunigung g.

Dabei reicht der Frequenzbereich von etwa 50 Hz bis lediglich ca. eine Schwingung pro Stunde. Die hierzu notwendige seismische Masse ist mit 10 kg oder mehr daher sehr groß.

Bedingt durch die sehr kleinen auftretenden mechanischen Schwingungen werden für die Kalibrierung solcher großen Schwingungsaufnehmer, d.h. Schwingungsaufnehmer mit großen seismischen Massen, sehr hohe Anforderungen an die mechanischen Randbedingungen der Schwingprüfeinrichtung, insbesondere den Schwingungserreger, gestellt. Mit dem Schwingungserreger soll ein hochwertiges sinusförmiges, störungsarmes Erregersignal erzeugbar sein, welches sich durch eine möglichst exakt eingehaltene Schwingungsamplitude, einen geringen (< 5%) Klirrfaktor, d.h. dem Maß unerwünschter Verzerrungen des Erregersignals, sowie einen stetigen Signalverlauf auszeichnet.

Zur Kalibrierung von Schwingungsaufnehmern mit einer horizontalen, d.h. waagerechten, wechselförmigen Schwingungsanregung ist es bekannt zur Reduzierung der Reibung Luftlager einzusetzen. Hierdurch lassen sich im Vergleich zu den konventionellen Lagerungen über Gleitlager, Wälzlager oder Federlager besonders hohe Präzision und Dynamik der Bewegung realisieren. Die Grundidee der Luftlagerung besteht darin, dass der zu lagernde Gegenstand sozusagen auf einem Luftfilm schwimmt, wobei der zu lagernde Gegenstand außer der sehr geringen Fluidreibung innerhalb des Luftfilms und in den Grenzschichten des Luftfilms hin zu den begrenzenden Flächen reibungsfrei läuft. Dementsprechend ermöglichen Luftlager eine reibungsarme Bewegung eines Gegenstandes. Grundsätzlich sind sowohl lineare als auch rotatorische Luftlager bekannt, die ihrerseits wiederum in statische als auch in dynamische Luftlager unterschieden werden können. Die geometrische Ausprägung von Luftlagern ist vielfältig. Es sind beispielsweise zylindrische, rechteckige oder ebene Formen oder auch spezielle geometrische Formen bekannt.

Bei der Kalibrierung von Schwingungsaufnehmern mit einer vertikalen, d.h. senkrechten, wechselförmigen Schwingungsanregung wird die zur Schwingungsanregung benötigte Kraft von der statischen Gewichtskraft des Schwingungsaufnehmers im Erdschwerefeld überlagert. Damit für beide Anregungsrichtungen, mithin entgegen und gleich gerichtet zur Gewichtskraft des Schwingungsaufnehmers, der gleiche Betrag der Kraft der Schwingungsanregung zur Verfügung steht, ist es bekannt, die Gewichtskräfte zu kompensieren. Hierzu sind unterschiedliche Verfahren bekannt, wobei allen Verfahren gemein ist, dass eine zusätzliche, der Gewichtskraft des anzuregenden Prüflings, beispielsweise eines Schwingungsaufnehmers, entgegen gerichtete statische Kraft ausgeübt wird. Die zu dieser Lastkompensation notwendigen Kräfte können entweder elektrodynamisch, hydraulisch, pneumatisch oder durch eine Federkraft erzeugt werden.

Von dem Unternehmen Spektra Schwingungstechnik und Akustik GmbH ist eine Kalibriervorrichtung CS18 VLF zur Kalibrierung von Beschleunigungsaufnehmern in horizontaler und vertikaler Richtung mit einem Schwingungserreger bekannt. Der Schwingungserreger weist einen als Linearantrieb ausgebildeten Aktor auf, der zur dynamischen Anregung von Massen in die Anregungsrichtung eingesetzt wird. Der bewegbare Teil der Kalibriervorrichtung, ein linear bewegbarer Schlitten, der auch als Armatur bezeichnet wird, ist hierbei mittels eines linear ausgebildeten Luftlagers mit dem feststehenden Teil der Kalibriervorrichtung, einer Basis, verbunden. Zur Kalibrierung von Schwingungsaufnehmern in vertikaler Anregungsrichtung weist die Kalibriervorrichtung zudem eine elektrische Nulllagenregelung auf, die die vom Schlitten und dem Schwingungsaufnehmer ausgeübte Gewichtskraft kompensiert. Hierzu wird ein Teil der Antriebsenergie des erwähnten Linearantriebs verwendet, so dass entgegen der Gewichtskraft nicht die volle, zur Schwingungsanregung eigentlich zur Verfügung stehende Kraft benutzt werden kann.

Ferner sind Lastkompensationen bekannt, bei denen mechanische Federkräfte eingesetzt werden, um die Gewichtskraft eines anzuregenden Prüflings zu kompensieren. Grundsätzlich nachteilig bei der Verwendung von Stahlfedern sind die gegebenen Grenzen der Festigkeit und der Nachgiebigkeit als auch die Möglichkeit der Anregung von Resonanzen. Bei der Verwendung von Elastomerfedern entstehen zudem Nichtlinearitäten, die zur Erzeugung eines verzerrungsarmen Erregersignals kompensiert werden müssten. Weiterhin verursachen die benannten Federn Unstetigkeiten im Erregersignal durch die vorhandene äußere und innere Reibung, wie sie sich beispielsweise im Haftreibungseffekt (Stick-Slip-Effekt) äußern.

Weiterhin sind Lastkompensationen bekannt, die ein komprimiertes, mithin einen Überdruck bildendes Medium aufweisen.

Zum einen sind zur Lastkompensation Hydraulikzylinder bekannt, wie sie beispielsweise zur Untersuchung des Schwingungsverhaltens ganzer Fahrzeuge eingesetzt werden. Das komprimierte Medium, im vorliegenden Fall Hydraulikflüssigkeit, ist hierbei in einem abgeschlossenen System vorgehalten, wobei einige Teile, vorliegend die Kolbenstange des Hydraulikzylinders, über die Systemgrenze hinausgehen. Dementsprechend müssen Dichtungen, beispielsweise Wellendichtringe, vorgesehen sein. Diese Dichtungen weisen zum einem einen nachteiligen Verschleiß auf und verursachen zudem durch die auftretende Reibung Unstetigkeiten im zu erzeugenden Erregersignal.

Weiterhin ist bekannt, komprimierte Luft in einer Gummiblase als Lastkompensation zu verwenden. So bietet die Tira GmbH eine Schwingprüfeinrichtung an, die zur Lastkompensation eine solch gefüllte Gummiblase verwendet. Dabei ist die Gummiblase unterhalb des zu bewegenden Teils, der Armatur angeordnet, um dessen Gewichtskraft zu kompensieren. Zwischen der Gummiblase und angrenzenden Bauteilen der Schwingprüfeinrichtung treten Reibungskräfte auf, die ihrerseits wiederum zu Unstetigkeiten im zu erzeugenden Erregersignal führen.

Nachteilig bei allen bekannten Möglichkeiten der Lastkompensation ist somit, dass durch die auftretende Reibung und andere Nichtlinearitäten zusätzliche Störsignale erzeugt werden, die die Erzeugung eines rein sinusförmigen Signalverlaufs, wie er für die Kalibrierung von Schwingungsaufnehmern, insbesondere Schwingungsaufnehmern großer Masse, d.h. im Bereich von 10 kg oder mehr, notwendig ist, verhindern. Eine Aufgabe der Erfindung besteht demnach darin, einen Schwingungserreger mit Lastkompensation zur dynamischen Anregung von Prüflingen anzugeben, wobei zur Erzeugung hochwertiger sinusförmiger, störsignalarmer Erregersignale, die bei der Lastkompensation auftretende Reibung und andere Nichtlinearitäten minimiert werden und wobei ebenfalls sowohl der Schwingweg als auch die zur Schwingungsanregung benötigte Kraft in beide Anregungsrichtungen, d.h. entgegen und gleich gerichtet zur Gewichtskraft, unabhängig und uneingeschränkt von der Lastkompensation der Gewichtskraft verfügbar sind.

Zur Lösung der Aufgabe ist bei einem Schwingungserreger mit Lastkompensation der eingangs genannten Art vorgesehen, dass das Linearführungsmittel ein Luftlager aufweist und dass das Lastkompensationsmittel das Linearführungsmittel mit umfasst.

Durch diesen erfindungsgemäßen reibungsarmen Schwingungserreger mit Lastkompensation wird es möglich, sehr hochwertige sinusförmige, störsignalarme Erregersignale zu erzeugen, wodurch, beispielsweise bei der Kalibrierung schwerer Schwingungsaufnehmer in vertikaler Richtung, eine größere Genauigkeit der Kalibrierung erreicht werden kann.

Weiterhin vorteilhaft ist es, dass die Antriebsenergie des Aktors gerade nicht zur Lastkompensation eingesetzt wird. Die Antriebsenergie des Aktors kann vielmehr zu einer im Wesentlichen symmetrischen Einleitung von Anregungskräften in Anregungsrichtung genutzt werden. Dies ist besonders vorteilhaft für die sinusförmige Anregung eines Gegenstandes. Durch die Korrelation der Anregungskraftamplitude mit der Schwingungsamplitude, d.h. dass unabhängig von der Richtung der Gewichtskraft für gleiche Anregungsamplituden der Schwingungsgröße gleiche Anregungskraftamplituden erforderlich sind, können besonders hochwertige sinusförmige Erregersignale erzeugt werden, was wiederum zu einer größeren Genauigkeit der Kalibrierung führt.

Ein weiterer Vorteil des erfindungsgemäßen reibungsarmen Schwingungserregers mit Lastkompensation besteht darin, dass dieser sehr kompakt gestaltet ist. Dies liegt daran, dass das Linearführungsmittel vom Lastkompensationsmittel mit umfasst ist. Mit anderen Worten; wenn das Lastkompensationsmittel durch eine Baugruppe aus einer Menge von Einzelbauteilen gebildet ist, so ist das Linearführungsmittel aus Einzelbauteilen derselben Menge gebildet. Anders ausgedrückt, teilen sich das Lastkompensationsmittel und das Linearführungsmittel bestimmte Einzelbauteile der erwähnten Baugruppe. Vorteilhafte Weiterbildungen und Ausgestaltungen sind in den Gegenständen der abhängigen Ansprüche angegeben.

Gemäß der Erfindung weist das Lastkompensationsmittel einen Pneumatikzylinder auf, dessen Kolbenstange und/oder Kolben durch jeweils ein Luftlager linear geführt ist/sind. Hierbei teilen sich Linearführungsmittel und Lastkompensationsmittel die Kolbenstange und/oder den Kolben als gemeinsames Bauteil der oben erwähnten Baugruppe. Ist das Gehäuse des Pneumatikzylinders mit der Basis und der bewegliche Kolben oder die Kolbenstange mit der beweglichen Armatur verbunden und ist der Kolben und/oder die Kolbenstange durch jeweils ein Luftlager geführt, so kann die Kompensation der Gewichtskraft der Armatur, und des ggf. an dieser angeordneten Gegenstandes, reibungsarm erfolgen. Mithin können nichtlineare reibungsbedingte Effekte während der Anregung der Armatur durch den Aktor minimiert werden.

In einer weiteren erfindungsgemäßen Ausgestaltung kann vorgesehen sein, dass das Lastkompensationsmittel n > 1 Pneumatikzylinder aufweist, deren Kolbenstangen und/oder Kolben durch jeweils ein Luftlager linear geführt ist/sind. Durch die Anordnung mehrerer Pneumatikzylinder n können diese zur Kompensation einer bestimmten Gewichtskraft kleiner dimensioniert sein, als wenn hierfür ein einzelner größer dimensionierter Pneumatikzylinder vorgesehen sein würde. Mithin ist der erfindungsgemäße Schwingungserreger durch diese Ausgestaltung besonders kompakt ausgebildet. Weist das Lastkompensationsmittel n > 1 Pneumatikzylinder auf, kann weiterhin vorgesehen sein, dass die n > 1 Pneumatikzylinder zueinander mit jeweils gleichen Mittelpunktswinkeln α = 360° / n kreisförmig um den Aktor angeordnet sind. Der Mittelpunktswinkel kann auch als Zentriwinkel bezeichnet werden. Durch diese Anordnung wird eine besonders symmetrische Kompensation der Gewichtskraft erreicht, um weitere Störeinflüsse, wie beispielsweise von eingebrachten Momenten, zu minimieren. Es hat sich herausgestellt, dass es besonders vorteilhaft ist, n = 3 zu wählen. Mithin bilden die Mittelpunktswinkel jeweils α = 120°.

Vom Erfindungsgedanken mit erfasst sind hierbei auch Anordnungen, von Pneumatikzylindern in anderen Mustern, wie beispielsweise einem Quadrat oder einem Rechteck, wobei der Aktor in solch einer Ausgestaltung beispielsweise im Schnittpunkt der Diagonalen des quadratischen oder rechteckigen Musters angeordnet ist. Es kann weiterhin vorgesehen sein, dass ein Pneumatikzylinder eine kreisringförmige Kolbenfläche aufweist. In solch einem Fall kann der Aktor zentrisch zum Pneumatikzylinder angeordnet sein, da der Pneumatikzylinder den Aktor umgibt. In Anregungsrichtung können dabei sowohl der Aktor als auch der Pneumatikzylinder mit der Armatur wechselwirken.

Zweckmäßig ist es, wenn der Aktor zumindest einen Linearantrieb aufweist. Dieser Linearantrieb kann entweder als ein Linearmotor mit elektrodynamischem Wirkprinzip oder als Linearaktor mit piezoelektrischem, elektrostatischem, elektromagnetischem, magnetostriktivem thermoelektrischem, pneumatischem oder hydraulischem Wirkprinzip ausgebildet sein. Vorteilhaft hieran ist, dass diese reibungsarm ausgebildet sein können, so dass hierdurch ebenfalls Störeinflüsse durch Nichtlinearität minimiert werden.

In einer weiteren Ausgestaltung kann vorgesehen sein, dass die Armatur über ein Rückstellmittel mit der Basis verbunden ist, wobei die Kraftwirkung des Rückstellmittels der Kraftwirkung des Lastkompensationsmittels entgegen gerichtet ist.

Zur Verhinderung von Schäden bei einer Fehlfunktion oder Überbeanspruchung des Schwingungserregers kann ein Armaturwegbegrenzungsmittel vorgesehen sein. Das beispielsweise durch mechanische Anschläge gebildete Armaturwegbegrenzungsmittel, begrenzt dabei den maximal möglichen Weg der Armatur in Anregungsrichtung.

Zum Detektieren mindestens einer der Größen 'Positionierung' und 'Bewegungszustand' der Armatur können weiterhin ein oder mehrere die Positionierung und/oder den Bewegungszustand der Armatur detektierende Messmittel, mitunter auch unterschiedlicher Wirkprinzipien, vorgesehen und dem Schwingungserreger zugeordnet sein. Besonders vorteilhaft ist es, wenn hierzu ebenfalls berührungslose Messmittel, wie beispielsweise ein Laser-Vibrometer, vorgesehen sind, da hierdurch die Rückwirkung des Messmittels auf den Schwingungserreger ausgeschlossen wird, wodurch wiederum die Störeinflüsse minimiert werden. So können mittels des Laser-Vibrometers als Messmittel Beschleunigung, Geschwindigkeit und Weg durch entsprechende Differentiation oder Integration des Geschwindigkeitssignals gleichzeitig ermittelt werden.

Im Folgenden wird die Erfindung anhand in den Figuren dargestellter bevorzugter Ausführungsbeispiele weiter erläutert und beschrieben. Dabei zeigt
- Fig. 1: eine schematische, unmaßstäbliche Seitenansicht des erfindungsgemäßen Schwingungserregers mit Lastkompensation und
- Fig. 2: eine schematische, unmaßstäbliche Draufsicht einer bevorzugten Ausführungsform des erfindungsgemäßen Schwingungserregers mit Lastkompensation mit drei Pneumatikzylindern.

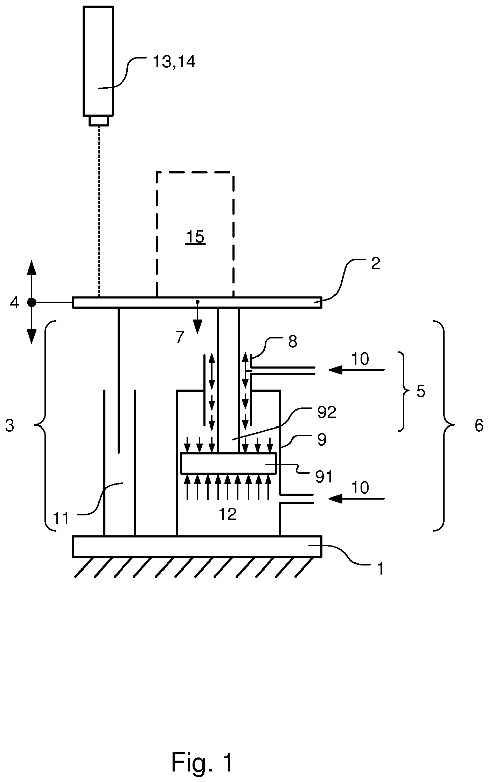

Die sehr vereinfachte schematische und unmaßstäbliche Seitenansicht des erfindungsgemäßen Schwingungserregers mit Lastkompensation in Fig. 1 dient zur Darstellung des grundlegenden Erfindungsgedankens. Es sollen in erster Linie der Grundaufbau und das Zusammenwirken der einzelnen Grundbestandteile des erfindungsgemäßen Schwingungserregers dargestellt werden.

Der in Fig. 1 dargestellte reibungsarme und Schwingungserreger mit Lastkompensation umfasst eine Basis 1, die feststehend an einer nicht dargestellten Struktur anordenbar ist, und eine in einer Anregungsrichtung 4 relativ zu dieser Basis 1 bewegbare Armatur 2. Der erfindungsgemäße Schwingungserreger ist sehr vorteilhaft zur reibungsarmen dynamischen vertikalen Anregung von Prüflingen geeignet. Dementsprechend ist die Anregungsrichtung 4 parallel zum Erdschwerefeld. Die Armatur 2 ist u. a. geeignet zur Aufnahme eines Prüflings 15, den es zu untersuchen oder zu kalibrieren gilt. Der erfindungsgemäße Schwingungserreger ist mithin nicht lediglich auf die Kalibrierung eines Schwingungsaufnehmers beschränkt. Vielmehr können auch andere Untersuchungen, wie beispielsweise Lebensdauerversuche, mit dem Schwingungserreger durchgeführt werden.

Zur dynamischen Anregung des Prüflings 15 ist die Basis 1 mittels eines Aktors 3 mit der Armatur 2 wirkverbunden. Hierzu ist in einer bevorzugten Ausführungsform ein Linearantrieb 11 vorgesehen. Dieser kann beispielsweise als elektrodynamischer Antrieb mit Tauchspule ausgeführt sein. Der Aktor 3 ist dabei so ausgebildet, dass die Armatur 2 zusammen mit dem Prüfling 15 in der Anregungsrichtung 4 sowohl in als auch entgegen dem Erdschwerefeld bewegbar ist.

Außerdem ist der Aktor 3 geeignet, die Armatur 2 und den Prüfling 15 in beliebigen Bewegungsformen anzuregen, wie beispielsweise einer harmonischen Sinusanregung, einer stochastischen Rauschanregung, einer sprungartigen Schockanregung. Die Position der Armatur 2 in Anregungsrichtung 4 in Abhängigkeit von der Zeit soll als Erregersignal bezeichnet werden.

Zur Kompensation der Gewichtskraft 7 der Armatur 2 und im Falle eines an der Armatur 2 angeordneten Prüflings 15 ebenfalls dessen Gewichtskraft 7, ist ein pneumatisches Lastkompensationsmittel 6 vorgesehen. In einer bevorzugten Ausführungsform ist das Lastkompensationsmittel 6 als Pneumatikzylinder 9 ausgebildet. Das Gehäuse des Pneumatikzylinders 9 ist fest an der Basis 1 angeordnet. Hierdurch wird die zu bewegende Masse und die zu kompensierende Gewichtskraft 7 reduziert. Die Kolbenstange 92 des Pneumatikzylinders 9 ist ferner mit der Armatur 2 wirkverbunden, so dass Kompensationskräfte 12 von einem Kolben 91 des Pneumatikzylinders 9 zur Kompensation der Gewichtskraft 7 auf die Armatur 2 übertragbar sind. Die Kompensationskraft 12 ist mittels des Drucks der Druckluft 10 steuerbar. Entsprechende Drucklufterzeugungsmittel und Steuermittel sind zur Vereinfachung nicht dargestellt. Durch die Lastkompensationsmittel 6 wird erreicht, dass zur Anregung der Armatur 2 und des Prüflings 15 mittels des Aktors 3 in Anregungsrichtung 4 in und entgegen dem Erdschwerefeld die gleichen Beträge der Anregungskraft notwendig sind. Weiterhin können hierdurch die gleichen Beträge der maximalen Verschiebung, mithin des maximalen Schwingweges, der Armatur 2 in Anregungsrichtung 4 erreicht werden. Der maximale Schwingweg kann in einer Ausführungsform durch hier nicht dargestellte Armaturwegbegrenzungsmittel begrenzt sein, wodurch der Schwingungserreger vor Zerstörung geschützt ist.

Zum parallelen Führen der Armatur 2 zur Anregungsrichtung 4, weist der Schwingungserreger ein Linearführungsmittel 5 auf.

Erfindungsgemäß ist vorgesehen, dass das Linearführungsmittel 5 hierzu ein Luftlager 8 aufweist, wodurch hochwertige sinusförmige, störungsarme Erregersignale erzeugbar sind. Störungsarme Erregersignale zeichnen sich dadurch aus, dass die zu erzeugende Schwingungsamplitude möglichst exakt eingehalten wird, der Klirrfaktor sehr gering (< 5%) ist und dass ein Signalverlauf ohne Unstetigkeiten erzeugt wird. Durch die Verwendung eines Luftlagers 8 können vor allem die oben schon benannten Stick-Slip-Effekte vermieden werden, wodurch ebenfalls die Schwingungsamplitude der Armatur 2 besser eingehalten werden kann.

Weiterhin ist vorgesehen, dass das Lastkompensationsmittel 6 das Linearführungsmittel 5 mit umfasst, wodurch eine besonders kompakte Gestaltung des lastkompensierten Schwingungserregers möglich ist. In einer bevorzugten Ausführungsform ist deshalb vorgesehen, das Luftlager 8 zur Lagerung der Kolbenstange 92 des Pneumatikzylinders 9 zu nutzen. In einer weiterführenden Ausführungsform kann vorgesehen sein, dass ebenfalls der Kolben 91 des Pneumatikzylinders 9 mittels eines weiteren Luftlagers 8 in dem Zylinder des Pneumatikzylinders 8 gelagert ist. Die Versorgung des Luftlagers 8 mit Druckluft 10 erfolgt durch nicht näher dargestellte Drucklufterzeugungsmittel mit entsprechenden Steuermitteln. Das Drucklufterzeugungsmittel des Pneumatikzylinders 9 und des Luftlagers 8 kann hierbei dieselbe sein, wobei durch entsprechende nicht dargestellte Ventile eine getrennte Versorgung des Pneumatikzylinders 9 und des Luftlagers 8, auch mit unterschiedlichen Drücken, möglich ist. Ein Teil der Druckluft 10 zur Versorgung des Luftlagers 8 wirkt der Kompensationskraft 12 entgegen.

Zur Erfassung des Erregersignals, d.h. einer der Größen Position und Bewegungszustand der Armatur 2, ist in einer Ausführungsform ein Messmittel 13 vorgesehen. Das Messmittel 13 ist in einer besonders vorteilhaften Ausführungsform als Laser-Vibrometer 14 ausgebildet. Ferner kann das Messmittel 13 jedoch auch anders, beispielsweise als Beschleunigungsaufnehmer, Geschwindigkeitsaufnehmer (elektrodynamisches Prinzip), Wegaufnehmer (induktiv, kapazitiv, magnetostriktiv, Laser-Triangulation, interferentiell, abbildend) oder anders ausgebildet sein. Ferner kann das Messmittel 13 auch aus mehreren Messmitteln unterschiedlicher Wirkprinzipien bestehen. Mittels des Laser-Vibrometers 14 kann das Erregersignal berührungslos und damit rückkopplungsfrei auf den Schwingungserreger erfasst werden. Das Messmittel 13 kann hierzu mit einer nicht dargestellten Auswerteeinrichtung verbunden sein. Wird der Prüfling durch einen Beschleunigungsaufnehmer gebildet, können dessen Messsignale ebenfalls in der nicht dargestellten Auswerteeinrichtung verarbeitet werden.

Während Fig. 1 lediglich jeweils einen Aktor 3, ein Linearführungsmittel 5 und ein Lastkompensationsmittel 6 zeigt, sind jedoch auch Ausführungsformen möglich, bei denen jeweils mehr als ein Aktor 3, ein Linearführungsmittel 5 und ein Lastkompensationsmittel 6 vorgesehen sind.

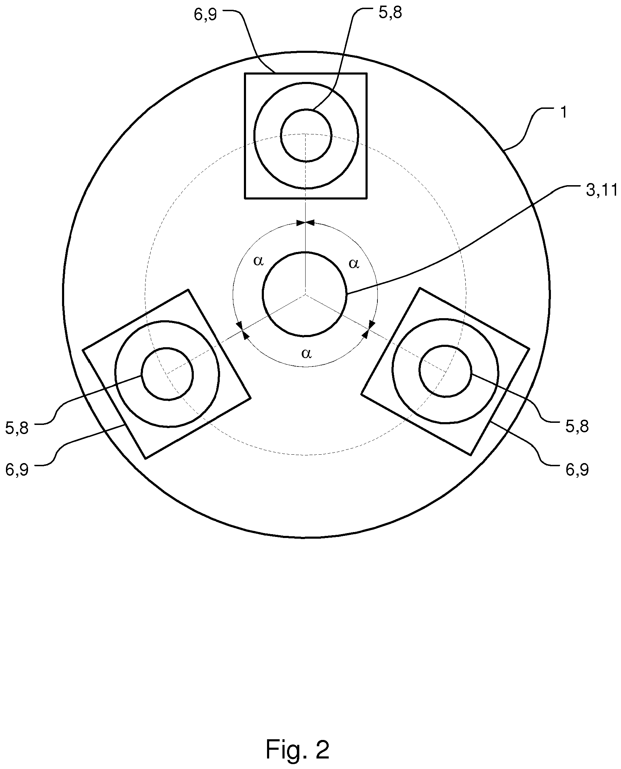

So zeigt Fig. 2 eine schematische, unmaßstäbliche Draufsicht einer bevorzugten Ausführungsform des erfindungsgemäßen lastkompensierten Schwingungserregers, wobei in Fig. 2 jedoch nicht der gesamte Schwingungserreger dargestellt ist, sondern nur eine Auswahl der Grundbestandteile, um die Anordnung von Aktor 3, Linearführungsmittel 5 und Lastkompensationsmittel 6 zueinander zu verdeutlichen.

Dargestellt in Fig. 2 ist die Basis 1, wobei drei Lastkompensationsmittel 6 mit jeweils einem Linearführungsmittel 5 und ein Aktor 3 auf der Basis 1 angeordnet sind. Als Lastkompensationsmittel 6 ist jeweils ein Pneumatikzylinder 9 und als Linearführungsmittel 5 jeweils ein Luftlager 8 vorgesehen. Es hat sich gezeigt, dass es besonders vorteilhaft ist, die Pneumatikzylinder 9 kreisförmig um den Aktor 3 anzuordnen, wobei der Aktor als Linearantrieb 11 in Form eines elektrodynamischen Antriebs mit Tauchspule ausgebildet ist. Die Mittelpunktswinkel α sind mit jeweils 120° alle gleich groß. Der radiale Abstand der Pneumatikzylinder 9 zum Aktor 3 ist so gewählt, dass eine kompakte Bauweise des Schwingungserregers erreicht wird.

Wie oben bereits benannt, sind grundsätzlich auch andere Anordnungen des Aktors 3, der Linearführungsmittel 5 und der Lastkompensationsmittel 6 zueinander möglich.

## Patentansprüche

1. Schwingungserreger mit Lastkompensation zur dynamischen Anregung von Prüflingen umfassend
- eine Basis (1),
- einen Aktor (3),
- eine mittels des Aktors (3) in einer Anregungsrichtung (4) relativ zur Basis (1) bewegbare und durch ein Linearführungsmittel (5) parallel zur Anregungsrichtung (4) geführte Armatur (2),
- und ein die Gewichtskraft (7) zumindest der Armatur (2) kompensierendes pneumatisches Lastkompensationsmittel (6),
wobei das Linearführungsmittel (5) ein Luftlager (8) aufweist und dass das Lastkompensationsmittel (6) das Linearführungsmittel (5) mit umfasst, **dadurch gekennzeichnet, dass** das Lastkompensationsmittel (6) einen Pneumatikzylinder (9) aufweist, dessen Kolbenstange (92) und/oder Kolben (91) durch jeweils ein Luftlager (8) linear geführt ist/sind.

2. Schwingungserreger nach Anspruch 1, **dadurch gekennzeichnet, dass** das Lastkompensationsmittel (6) n > 1 Pneumatikzylinder (9) aufweist, deren Kolbenstangen (92) und/oder Kolben (91) durch jeweils ein Luftlager (8) linear geführt ist/sind.

3. Schwingungserreger nach Anspruch 2, **dadurch gekennzeichnet, dass** die n > 1 Pneumatikzylinder (9) zueinander mit jeweils gleichen Mittelpunktswinkeln α = 360° / n kreisförmig um den Aktor (3) angeordnet sind.

4. Schwingungserreger nach einem der vorhergehenden Ansprüche, **dadurch gekennzeichnet, dass** der Aktor (3) zumindest einen Linearantrieb (11) aufweist.

5. Schwingungserreger nach Anspruch 4, **dadurch gekennzeichnet, dass** der Linearantrieb (11) als Linearmotor mit elektrodynamischem Wirkprinzip oder als Linearaktor mit elektromagnetischem, magnetostriktivem thermoelektrischem, pneumatischem oder hydraulischem Wirkprinzip ausgebildet ist.

6. Schwingungserreger nach einem der vorhergehenden Ansprüche, **dadurch gekennzeichnet, dass** die Armatur (2) über ein Rückstellmittel mit der Basis (1) verbunden ist, wobei die Kraftwirkung des Rückstellmittels der Kraftwirkung des Lastkompensationsmittels (6) entgegen gerichtet ist.

7. Schwingungserreger nach einem der vorhergehenden Ansprüche, **dadurch gekennzeichnet, dass** ein Armaturwegbegrenzungsmittel vorgesehen ist.

8. Schwingungserreger nach einem der vorhergehenden Ansprüche, **dadurch gekennzeichnet, dass** ein die Positionierung und/oder den Bewegungszustand der Armatur (2) detektierendes Messmittel (13) angeordnet ist.

## Claims

1. Vibration generator with load compensation for the dynamic excitation of test specimens, comprising
- a base (1),
- an actuator (3)
- an armature (2) which is movable relative to the base (1) in an excitation direction (4) by means of the actuator (3) and which is guided parallel to the excitation direction (4) by a linear guide means (5),
- and a pneumatic load compensation means (6) which compensates for the weight force (7) of at least the armature (2),
wherein the linear guide means (5) has an air bearing (8) and wherein the load compensation means (6) concomitantly comprises the linear guide means (5), **characterized in that** the load compensation means (6) has a pneumatic cylinder (9) whose piston rods (92) and/or piston (91) are/is linearly guided by a respective air bearing (8).

2. Vibration generator according to Claim 1, **characterized in that** the load compensation means (6) has n > 1 pneumatic cylinders (9) whose piston rods (92) and/or pistons (91) are/is linearly guided by a respective air bearing (8).

3. Vibration generator according to Claim 2, **characterized in that** the n > 1 pneumatic cylinders (9) are arranged in a circle shape around the actuator (3) with respect to one another at respectively equal centre point angles α = 360°/n.

4. Vibration generator according to one of the preceding claims, **characterized in that** the actuator (3) has at least one linear drive (11).

5. Vibration generator according to Claim 4, **characterized in that** the linear drive (11) is designed as a linear motor having an electrodynamic operating principle or as a linear actuator having an electromagnetic, magnetostrictive, thermoelectric, pneumatic or hydraulic operating principle.

6. Vibration generator according to one of the preceding claims, **characterized in that** the armature (2) is connected to the base (1) via a resetting means, wherein the action of force of the resetting means is directed counter to the action of force of the load compensation means (6).

7. Vibration generator according to one of the preceding claims, **characterized in that** an armature displacement-limiting means is provided.

8. Vibration generator according to one of the preceding claims, **characterized in that** there is arranged a measuring means (13) which detects the positioning and/or the movement state of the armature (2).

## Revendications

1. Générateur de vibrations à compensation de charge servant à l'excitation dynamique d'échantillons d'essai, comprenant
- une base (1),
- un actionneur (3),
- une armature (2) pouvant être déplacée au moyen de l'actionneur (3) dans une direction d'excitation par rapport à la base (1) et guidée par un moyen de guidage linéaire (5) en parallèle à la direction d'excitation (4),
- et un moyen de compensation de charge pneumatique (6) compensant le poids (7) au moins de l'armature (2), le moyen de guidage linéaire (5) présentant un coussin d'air (8), et le moyen de compensation de charge (6) comprenant également le moyen de guidage linéaire (5), **caractérisé en ce que** le moyen de compensation de charge (6) présente un vérin pneumatique (9) dont la tige de piston (92) et/ou le piston (91) sont guidés de manière linéaire par respectivement un coussin d'air (8) .

2. Générateur de vibrations selon la revendication 1, **caractérisé en ce que** le moyen de compensation de charge (6) présente n > 1 vérins pneumatiques (9) dont les tiges de piston (92) et/ou les pistons (91) sont guidés de manière linéaire par respectivement un coussin d'air (8).

3. Générateur de vibrations selon la revendication 2, **caractérisé en ce que** les n > 1 vérins pneumatiques (9) sont disposés en forme de cercle autour de l'actionneur (3) les uns par rapport aux autres selon des angles au centre α = 360° / n respectivement identiques.

4. Générateur de vibrations selon l'une quelconque des revendications précédentes, **caractérisé en ce que** l'actionneur (3) présente au moins un entraînement linéaire (11).

5. Générateur de vibrations selon la revendication 4, **caractérisé en ce que** l'entraînement linéaire (11) est réalisé sous la forme d'un moteur linéaire à principe de fonctionnement électrodynamique ou d'un actionneur linéaire à principe de fonctionnement électromagnétique, magnétostrictif thermoélectrique, pneumatique ou hydraulique.

6. Générateur de vibrations selon l'une quelconque des revendications précédentes, **caractérisé en ce que** l'armature (2) est reliée à la base (1) par l'intermédiaire d'un moyen de rappel, l'effet de force du moyen de rappel étant dirigé à l'opposé de l'effet de force du moyen de compensation de charge (6).

7. Générateur de vibrations selon l'une quelconque des revendications précédentes, **caractérisé en ce qu'**un moyen de limitation de course d'armature est prévu.

8. Générateur de vibrations selon l'une quelconque des revendications précédentes, **caractérisé en ce qu'**un moyen de mesure (13) détectant le positionnement et/ou l'état de mouvement de l'armature (2) est disposé.
